(19) Europäisches Patentamt
European Patent Office
Office européen des brevets

(11) EP 3 239 186 A1

(12) DEMANDE DE BREVET EUROPEEN

(43) Date de publication:
**01.11.2017 Bulletin 2017/44**

(51) Int Cl.:
***C08F 2/38*** (2006.01)

(21) Numéro de dépôt: **16197743.4**

(22) Date de dépôt: **27.09.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2010 FR 1057900**

(62) Numéro(s) de document de la (des) demande(s) initiale(s) en application de l'article 76 CBE:
**11773796.5 / 2 621 959**

(27) Demande déposée antérieurement:
**27.09.2011 EP 11773796**

(71) Demandeurs:
- **Rhodia Operations**
  **75009 Paris (FR)**
- **CENTRE NATIONAL DE LA RECHERCHE SCIENTIFIQUE**
  **75016 Paris (FR)**

(72) Inventeurs:
- **DESTARAC, Mathias**
  **31000 TOULOUSE (FR)**
- **GUINAUDEAU, Aymeric**
  **69009 Lyon (FR)**
- **MAZIERES, Stéphane**
  **31320 CASTANET-TOLOSAN (FR)**
- **WILSON, James**
  **60580 COYE-LA-FORET (FR)**

(74) Mandataire: **Cordier, Pascal Christian et al**
**Rhodia Operations**
**Direction de la Propriété Industrielle**
**40, rue de la Haie Coq**
**93306 Aubervilliers (FR)**

Remarques:
Cette demande a été déposée le 08-11-2016 comme demande divisionnaire de la demande mentionnée sous le code INID 62.

# (54) PRÉPARATION DE POLYMÈRES HYDROPHILES DE HAUTE MASSE PAR POLYMÉRISATION RADICALAIRE CONTROLÉE

(57) La présente invention concerne un procédé de préparation d'un polymère comprenant au moins une étape (E) de polymérisation en gel, qui donne accès à des blocs polymère de haute masse contrôlée, dans laquelle on met en contact :
- des monomères hydrosolubles éthyléniquement insaturés, identiques ou différents ;
- une source de radicaux libres adaptée à la polymérisation desdits monomères, typiquement un système redox ; et
- un agent de contrôle de la polymérisation radicalaire, de préférence comprenant un groupe thiocarbonylthio -S(C=S)-,

avec une concentration en monomères au sein du milieu réactionnel de l'étape (E) qui est suffisamment élevée pour induire la gélification du milieu si la polymérisation était conduite en l'absence de l'agent de contrôle.

EP 3 239 186 A1

## Description

La présente invention a trait à un procédé de polymérisation original donnant accès à des polymères hydrosolubles de très haute masse, typiquement de l'ordre de 100 000 à 1 000000 g/mol, et ce avec un contrôle de la masse de ces polymères. L'invention concerne également les polymères hydrosolubles de haute masse contrôlée ainsi obtenus, qui sont utilisables notamment à titre d'agents rhéologiques, de modificateurs de surface et d'agents floculant.

En polymérisation radicalaire conventionnelle, on connaît différents procédés permettant d'obtenir des polymères hydrosolubles de très hautes masses. Il a par notamment été décrit la mise en oeuvre de procédés de polymérisation en émulsion inverse eau-dans-huile, qui permettent de récupérer le polymère hydrophile (par ex. du polyacrylamide) par inversion de l'émulsion. Un autre moyen d'obtenir des polymères hydrophiles de haute masse est la polymérisation en solution dans l'eau à basse température (généralement entre 5°C et 25°C), typiquement avec un amorçage rédox.

Plus spécifiquement, il a été développé des procédés de polymérisation dit « en gel » (« *gel polymerisation* » en anglais) qui permettent d'obtenir des polymères de très hautes masses. Dans les procédés de ce type, une faible concentration d'un couple rédox adapté est mise en contact à basse température et en milieu aqueux avec au moins un monomère hydrophile (l'acrylamide typiquement). Dans ces procédés, la concentration en monomère dans l'eau est choisie suffisamment élevée pour que le milieu réactionnel gélifie rapidement en cours de polymérisation. En fin de réaction, le polymère est sous forme de gel physique dans l'eau, qui est typiquement un gel non covalent, formé essentiellement par des interactions physiques réversibles, telles que par exemple des liaisons hydrogènes. Il est récupéré pour être séché et broyé. Dans ces conditions, des polyacrylamides de $M_n$ très supérieurs à $10^6$g/mol (>$10^7$g/mol) peuvent être obtenus.

Dans le cadre de la présente description, et sauf mention contraire, un « gel physique » désigne un gel non covalent du type précité, à l'exclusion de structure réticulées chimiquement, de type résine par exemple. En particulier, ces gels physiques, tels qu'obtenus selon les procédés de polymérisation en gel, se distinguent des structures dites « nanogels » ou « microgels » décrites par exemple dans WO 2010/046342 ou WO 2008/155282 et qui comprennent des globules d'une phase réticulées chimiquement (abusivement décrite comme « gélifiée ») au sein d'un milieu dispersant.

Ces procédés donnent certes accès à des polymères de haute masse, et ce généralement avec des vitesses de réaction élevées. Néanmoins, ils ne s'avèrent pas pleinement satisfaisants. En particulier, la gélification rapide du milieu engendre une exothermie très élevée, ce qui implique notamment la mise en oeuvre de systèmes amorceurs spécifiques. Plus fondamentalement, les procédés de polymérisation en gel ne sont pas à même d'assurer un contrôle de la taille et de l'architecture des chaînes polymères formées. En particulier, la polymérisation en gel ne permet pas d'accéder à des polymères séquencés (diblocs par exemple).

Par ailleurs, on connaît, à l'inverse, des procédés de polymérisation qui permettent d'assurer un contrôle fin de la masse molaire des polymères, mais qui ne permettent cependant pas d'accéder à de très hautes masses molaires, notamment lorsqu'on souhaite réaliser une polymérisation en phase aqueuse.

Plus précisément, on connaît à l'heure actuelle différents procédés de polymérisation radicalaire contrôlée, désignés notamment sous la terminologie RAFT ou MADIX, qui permettent d'obtenir des polymères à architecture et masse contrôlées. Ces procédés mettent typiquement en oeuvre un procédé de transfert réversible par addition-fragmentation employant des agents de contrôle (dits également de transfert réversible), par exemple de type xanthate (composés porteurs de fonctions -SC=SO-). A titre d'exemples de tels procédés, il peut notamment être fait mention de ceux décrits dans WO96/30421, WO 98/01478, WO 99/35178, WO 98/58974, WO 00/75207, WO 01/42312, WO 99/35177, WO 99/31144, FR2794464 ou WO 02/26836.

Ces procédés dits de « polymérisation radicalaire contrôlée » conduisent de façon bien connue à la formation de chaînes polymères qui croissent sensiblement toutes à la même vitesse, ce qui se traduit par une augmentation sensiblement linéaire des masses moléculaires avec la conversion et une distribution des masses resserrée, avec un nombre de chaînes qui reste typiquement sensiblement fixe pendant toute la durée de la réaction, ce qui permet de contrôler très aisément la masse molaire moyenne du polymère synthétisé (cette masse est d'autant plus élevées que la concentration initiale en agent de contrôle est faible, cette concentration dictant le nombre de chaînes polymères en croissance).

Ainsi, par exemple, les procédés de polymérisation contrôlée de l'acrylamide divulgués à ce jour conduisent à des polymères de taille relativement limitée. Ainsi, parmi les exemples de polymérisations radicalaires contrôlées de l'acrylamide conduisant aux polymères de tailles les plus élevées, on peut citer :

- une polymérisation RAFT de l'acrylamide amorcée par voie redox à l'ambiante, décrite dans Macromolecular Rapid Communications, vol. 29, N°7, pp. 562 - 566 (2008), qui conduit à des polyacrylamides ayant une masse molaire en nombre $M_n$ d'au plus 40 000 g/mol ; et

- un procédé de polymérisation RAFT en miniémulsion inverse qui a été décrit dans Macromolecular Rapid Communications, vol. 28, n°9, p. 1010 (2007), qui conduit à des masses moléculaires en nombre allant jusqu'à 70 000 - 80 000 g/mol.

Ces articles constituent des exceptions, les tailles des polymères obtenus dans le cadre de polymérisations radicalaires contrôlées étant généralement bien inférieures à ces valeurs extrêmes relevées dans la littérature.
Un but de la présente invention est de fournir un procédé permettant d'obtenir à la fois des polymères hydrophiles de très haute masse molaire, largement supérieures à 100 000 g/mol, de préférence d'au moins 500 000 g/mol, tout en assurant un contrôle de la masse des polymères, avec une augmentation sensiblement linéaire des masses moléculaires avec la conversion et une distribution des masses resserrée autour d'une valeur moyenne.
A cet effet, la présente invention fournit un nouveau type de procédé de synthèse de polymères hydrophiles, qui allie les spécificités de la polymérisation en gel et de la polymérisation radicalaire contrôlée. Contre toute attente, il s'avère que ce nouveau type de procédé permet de cumuler les avantages de chacune des deux méthodes sans en conserver les aspects néfastes.
Plus précisément, selon un premier aspect, la présente invention fournit un procédé de préparation d'un polymère comprenant au moins une étape (E) de polymérisation en gel dans laquelle on met en contact, généralement en milieu aqueux :

- des monomères hydrosolubles éthyléniquement insaturés, identiques ou différents ;
- une source de radicaux libres adaptée à la polymérisation desdits monomères, typiquement un système redox ; et
- un agent de contrôle de la polymérisation radicalaire, de préférence comprenant un groupe thiocarbonylthio -S(C=S)-,

avec une concentration en monomères au sein du milieu réactionnel de l'étape (E) qui est suffisamment élevée pour induire la gélification du milieu si la polymérisation était conduite en l'absence de l'agent de contrôle.
Les travaux qui ont été réalisés par les inventeurs dans le cadre de la présente invention ont maintenant permis de mettre en évidence que la mise en oeuvre de l'étape (E), qui consiste schématiquement à mettre en oeuvre dans les conditions d'une synthèse en gel un agent de contrôle de polymérisation du type de ceux employés pour la synthèse de polymères contrôlés de faibles masses, conduit à la formation de polymères de taille à la fois élevée et contrôlée, ce qui s'avère tout particulièrement inattendu au vu des tailles maximales qu'on sait obtenir aujourd'hui en employant des méthodes de polymérisation radicalaire contrôlée. Dans les conditions de l'étape (E), il s'avère en fait possible de contrôler la masse molaire moyenne en nombre des polymères jusqu'à des valeurs très élevées, ce qui autorise la synthèse de polymères et copolymères à architecture contrôlée avec au moins une séquence hydrophile à la fois de haute masse et de masse contrôlée.
Comme en polymérisation radicalaire contrôlée usuelle, le procédé de l'étape (E) conduit à la synthèse de polymères dont la masse molaire en nombre $M_n$ est régulable en jouant sur la concentration initiale en agent de contrôle dans le milieu, la valeur de $M_n$ étant d'autant plus élevée que cette concentration initiale en agent de contrôle est faible. En ajustant cette concentration, l'étape (E) peut typiquement conduire à la synthèse d'un bloc polymère hydrophile ayant une masse moléculaire Mn supérieure à 500 000 g/mol, par exemple entre 500 000 et 1 000 000 g/mol. Ainsi, il s'avère qu'on obtient dans l'étape (E) un contrôle effectif de la masse moyenne des polymères, de type similaire à celui obtenu avec les procédés classiques de polymérisation radicalaire contrôlée, à la différence que ce contrôle s'avère efficace jusqu'à des tailles très élevées (pouvant aller jusqu'à 1 000 000 g/ mol, voire plus. Selon un mode de réalisation intéressant du procédé de l'invention, dans l'étape (E), la concentration initiale en agent de contrôle dans le milieu est choisie telle que la masse moléculaire moyenne bloc polymère hydrophile synthétisée a une masse moléculaire en nombre Mn supérieure à 100 000 g/mol, de préférence supérieure ou égale à 500 000 g/mol, par exemple entre 500 000 et 1 000 000 g/mol.
En outre, il s'avère que, de façon encore plus inattendue, la mise en oeuvre d'un agent de contrôle de polymérisation radicalaire dans l'étape (E) permet, en général, de réduire, voire d'inhiber totalement, les phénomènes d'exothermie généralement observés dans les procédés de polymérisation en gel.
Compte tenu de ces différents avantages, le procédé de l'invention constitue un procédé particulièrement adapté à la préparation de polymères hydrophiles, éventuellement à blocs, présentant une haute masse molaire.
De façon générale, dans le procédé de l'invention, les conditions à mettre en oeuvre dans l'étape (E) peuvent typiquement être calquées sur celles typiquement mises en oeuvre dans les polymérisations en gel bien connues de l'homme du métier. A ce sujet, concernant les conditions à mettre en oeuvre en polymérisation en gel, on pourra notamment se reporter aux brevets US 3,002,960, US 3,022, 279, US 3,480,761, US 3,929,791, US 4,455,411, ou US 7,449,439, ou bien encore au Iranian Polymer Journal, 14(7), pp 603-608 (2005).
Il est bien connu de l'homme du métier que la polymérisation en gel conduit à la formation d'un gel physique

qui est liée à un enchevêtrement des longues chaînes linéaires ou sensiblement linéaires en solution. La dissolution dudit gel en solution peut donc reconduire aux chaînes linéaires non-enchevêtrées de façon réversible.

Les monomères hydrophiles mis en oeuvre dans l'étape (E) sont typiquement ceux adaptés à la polymérisation en gel.

Ces monomères peuvent notamment comprendre de l'acide acrylique (AA). Selon un mode de réalisation possible, les monomères sont tous des acides acryliques, mais il est également envisageable de mettre en oeuvre à titre de monomères un mélange comprenant, entre autres, de l'acide acrylique, en mélange avec d'autres monomères hydrophiles.

Selon un autre mode de réalisation, les monomères mis en oeuvre dans l'étape (E) comprennent (et typiquement sont constitués de) monomères acrylamide, ou plus généralement de monomères acrylamido. Par monomères acrylamido, on désigne la famille de monomères incluant l'acrylamide, son dérivé sulfonate (AMPS) et ammonium quaternaire (APTAC).

L'acrylamide employé dans l'étape (E) est de préférence un acrylamide non stabilisé par du cuivre, ce qui peut sinon induire des problèmes d'exothermie, sauf à introduire un agent complexant du cuivre tel que l'EDTA. Le cas échéant, la teneur en complexant dans le milieu réactionnel est de préférence de l'ordre de 20 à 2000 ppm. Lorsqu'on utilise de l'acrylamide dans l'étape (E), celle-ci peut typiquement être employée sous forme de poudre, de solution aqueuse (éventuellement, mais non nécessairement, stabilisée par l'éther monométhylique de l'hydroquinone MEHQ, ou bien par des sels de cuivre (de préférence additionnée d'EDTA le cas échéant)).

Quelle que soit leur nature exacte, les monomères de l'étape (E) sont mis en oeuvre à des concentrations relativement élevées, à savoir suffisantes pour assurer la formation du gel si l'étape (E) était conduite en l'absence d'agent de contrôle. En d'autres termes, les monomères sont mis en oeuvre à une concentration adaptée à la mise en oeuvre d'une polymérisation en gel, qui sont bien connues du spécialiste de ce type de polymérisation. Typiquement, la concentration initiale en monomères dans le milieu réactionnel de l'étape (E) est d'au moins 10%, voire d'au moins 20% en masse par rapport à la masse totale du milieu réactionnel. Notamment pour limiter encore les phénomènes d'exothermie, il est néanmoins généralement préférable que cette concentration reste inférieure à 40%, de préférence inférieure à 35%, voire inférieure à 30% en masse par rapport à la masse totale du milieu réactionnel. De préférence, cette concentration initiale en monomères dans le milieu réactionnel de l'étape (E) est comprise entre 15% et 35%, par exemple entre 20 et 25% en masse par rapport à la masse totale du milieu réactionnel. Bien que ces conditions de concentration soient mises en oeuvre dans l'étape (E), elles ne conduisent pas nécessairement à une gélification du milieu réactionnel lors de la polymérisation, du fait de la présence de l'agent de contrôle. Dans certains cas, le système gélifie au cours de la polymérisation, mais il peut rester plus fluide dans d'autres cas. Dans tous les cas, l'étape (E) permet une polymérisation de type contrôlée, contrairement à la polymérisation en gel de type classique, conduite sans agent de contrôle additionnel.

Selon un mode de réalisation particulier, les monomères employés dans l'étape (E) sont des macromonomères thermosensibles, insolubles dans l'eau au-delà d'une certaine température (point de trouble ou "cloud point" en anglais), mais solubles à plus faible température, l'étape (E) étant conduite à une température inférieure à la température du point de trouble. Les macromonomères de ce type présentent typiquement une fonction polymérisable de type acrylamido, et une chaîne latérale composée d'enchaînements oxyde d'éthylène ou oxyde de propylène (statistique ou à blocs), ou bien à base de N-isopropylacrylamide, ou de N-vinylcaprolactame. Ce mode de réalisation donne notamment accès à la préparation de polymères présentant des propriétés thermoépaississantes, utilisables par exemple dans l'industrie pétrolière.

D'autre part, on peut utiliser dans l'étape (E) du procédé de l'invention toute source de radicaux libres connue en soi comme adaptée aux procédés de polymérisation en gel. Toutefois, de façon préférentielle, il s'avère généralement préférable d'utiliser dans ce cadre un amorceur radicalaire de type redox, qui présente l'avantage de ne pas nécessiter un chauffage du milieu réactionnel (pas d'amorçage thermique), ce qui permet de mieux gérer encore l'exothermie de la réaction.

Ainsi, la source de radicaux libres employée peut typiquement être choisie parmi les amorceurs redox classiquement utilisés en polymérisation radicalaire, typiquement ne nécessitant pas de chauffage pour leur amorçage thermique. Il s'agit typiquement d'un mélange d'au moins un agent oxydant avec au moins un agent réducteur.

L'agent oxydant présent dans le système redox est de préférence un agent hydrosoluble. Cet agent oxydant peut par exemple être choisi parmi les peroxydes, tels que : le peroxyde d'hydrogène, l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle ; le persulfate de sodium, le persulfate de potassium, le persulfate d'ammonium, ou bien encore le bromate de potassium.

L'agent réducteur présent dans le système redox est également, de préférence, un agent hydrosoluble. Cet agent réducteur peut typiquement être choisi parmi le formaldéhyde sulfoxylate de sodium (notamment sous sa forme de dihydrate, connue sous le nom de Rongalit ou sous la forme d'un anhydride), l'acide ascorbique, l'acide érythorbique,

les sulfites, bisulfites ou métasulfites (sulfites, bisulfites ou métasulfites de métaux alcalins en particulier), les nitrilotrispropionamides, et les amines et ethanolamines tertiaires (de préférence hydrosolubles).

Des systèmes redox possibles comportent des combinaisons telles que :

- les mélanges de persulfates hydrosolubles avec des amines tertiaires hydrosolubles,
- les mélanges de bromates hydrosolubles (bromate de métaux alcalins par exemple) avec des sulfites hydrosolubles (sulfites de métaux alcalins par exemple),
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Un système redox intéressant comprend (et de préférence consiste en) par exemple l'association de persulfate d'ammonium et de formaldéhyde sulfoxylate de sodium.

De façon générale, et en particulier dans le cas de l'utilisation d'un système redox du type persulfate d'ammonium/formaldéhyde sulfoxylate de sodium, il s'avère préférable que le milieu réactionnel de l'étape (E) soit exempt de cuivre. En cas de présence de cuivre, il est en général souhaitable d'ajouter un complexant du cuivre, tel que de l'EDTA.

La nature de l'agent de contrôle mis en oeuvre dans l'étape (E) peut quant à elle varier en une large mesure.

Selon une variante intéressante, l'agent de contrôle utilisé dans l'étape (E) est un composé porteur d'un groupe thiocarbonylthio -S(C=S)-. Selon un mode de réalisation particulier, l'agent de contrôle peut être porteur de plusieurs groupes thiocarbonylthio.

Il peut éventuellement s'agir d'une chaîne polymère porteuse d'un tel groupe. Ainsi, selon un mode de réalisation particulier, l'agent de contrôle employé dans l'étape (E) est un polymère vivant issu d'une étape ($E_0$) préalable dans laquelle on a réalisé la polymérisation radicalaire d'une composition comprenant :

- des monomères éthyléniquement insaturés ;
- un agent de contrôle de la polymérisation radicalaire comprenant au moins un groupe thiocarbonylthio -S(C=S)- ; et
- un amorceur de la polymérisation radicalaire (source de radicaux libres).

Selon ce mode de réalisation, l'étape (E) conduit à un copolymère séquencé comprenant au moins un bloc hydrophile de très haute masse molaire lié à la chaîne polymère issue de la polymérisation de l'étape ($E_0$).

Plus généralement, l'agent de contrôle mis en oeuvre dans l'étape (E) répond avantageusement à la formule (A) ci-dessous :

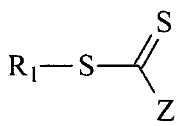

(A)

dans laquelle :

- Z représente :
  - un atome d'hydrogène,
  - un atome de Chlore,
  - un radical alkyl éventuellement substitué, aryl éventuellement substitué,
  - un hétérocycle éventuellement substitué,

- un radical alkylthio éventuellement substitué,
- un radical arylthio éventuellement substitué,
- un radical alkoxy éventuellement substitué,
- un radical aryloxy éventuellement substitué,
- un radical amino éventuellement substitué,
- un radical hydrazine éventuellement substitué,
- un radical alkoxycarbonyl éventuellement substitué,
- un radical aryloxycarbonyl éventuellement substitué,
- un radical carboxy, acyloxy éventuellement substitué,
- un radical aroyloxy éventuellement substitué,
- un radical carbamoyle éventuellement substitué,
- un radical cyano,
- un radical dialkyl- ou diaryl-phosphonato,
- un radical dialkyl-phosphinato ou diaryl-phosphinato, ou
- une chaîne polymère,

et

- $R_1$ représente :
  - un groupe alkyle, acyle, aryle, aralkyle, alcène ou alcyne éventuellement substitué,
  - un cycle carboné ou un hétérocycle, saturé ou non, aromatique éventuellement substitué, ou
  - une chaîne polymère.

Les groupes $R_1$ ou Z, lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, perfluoroalkyle $C_nF_{2n+1}$, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Selon un mode de réalisation particulier, $R_1$ est un groupe alkyle substitué ou non, de préférence substitué.

Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryle, on peut notamment citer le radical phényle, éventuellement substitué notamment par

une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque $R_1$ ou Z est une chaîne polymère, cette chaîne polymère peut être issue d'une polymérisation radicalaire ou ionique ou issue d'une polycondensation.

Dans le cadre de la présente invention, il est notamment intéressant d'employer à titre d'agents de contrôle des xanthates, des trithiocarbonates, des dithiocarbamates, ou des dithiocarbazates.

Avantageusement, on utilise, comme agent de contrôle dans l'étape (E), des composés porteurs d'une fonction xanthate -S(C=S)O-, par exemple porteur d'une fonction O-ethyl xanthate de formule $-S(C=S)OCH_2CH_3$, comme par exemple le O-ethyl-S-(1-methoxycarbonyl ethyl) xanthate de formule $(CH_3CH(CO_2CH_3))S(C=S)OEt$.

Un autre agent de contrôle possible dans l'étape (E) est le dibenzyltrithiocarbonate de formule $PhCH_2S(C=S)SCH_2Ph$ (où Ph=phényle).

Selon un mode de réalisation particulier, l'agent de contrôle utilisé dans l'étape (E) est un polymère vivant porteur d'une fonction thiocarbonylthio, notamment xanthate, par exemple O-ethyl xanthate, préparé dans une étape de polymérisation radicalaire contrôlée préalable à l'étape (E).

Selon un mode de réalisation intéressant de l'étape (E), cette étape est mise en oeuvre en l'absence de tout agent de réticulation. Néanmoins, dans le cas le plus général, la mise en oeuvre d'un agent de réticulation n'est pas exclue dans l'étape (E).

Selon un autre aspect particulier, la présente invention a pour objet les polymères tels qu'obtenus à l'issue du procédé de l'invention, qui comprennent au moins un bloc polymère hydrophile de masse contrôlée autour d'une valeur moyenne $M_n$ d'au moins 100 000 g/mol, de préférence d'au moins 500 000g/mol, par exemple entre 500 000 et 1 000 000 g/mol.

En particulier, l'invention a notamment pour objet les polymères tels qu'obtenus à l'issue du procédé de l'invention et qui comprennent au moins un bloc polyacrylamide de taille supérieure à 100 000 g/mol, de préférence d'au moins 500 000 g/mol, par exemple entre 500 000 et 1 000 000 g/mol.

Selon un mode de réalisation particulier, les polymères tels qu'obtenus à l'issue du procédé de l'invention sont linéaires, à savoir qu'ils sont exclusivement formés d'un enchaînement linéaire de monomères (étant entendu que chaque monomère de l'enchaînement peut éventuellement être porteur d'un groupement latéral). Les polymères linéaires au sens de la présente description se distinguent en particulier des polymères branchés, qui comportent un enchaînement linéaire de monomères et au moins un branchement sur lequel se greffe un autre enchaînement de monomères.

Les polymères hydrophiles de haute masse contrôlée selon l'invention peuvent être avantageusement employés dans différents type d'applications.

Ils peuvent notamment être employés à titre d'agent régulateur de la rhéologie (pour la pétrochimie par exemple), ou bien comme agent floculant (utilisable dans l'industrie papetière ou le traitement des eaux usées, notamment). Ils peuvent également être employés comme épaississants, ou comme agents viscosants, gélifiants, modificateurs de surface, et pour la constitution de matériaux nanonohybrides. Plus généralement, ils peuvent aussi être employés à titre d'agent de vectorisation.

Différentes caractéristiques et avantages de l'invention seront encore illustrés par les exemples ci-après dans lesquels des polymères ont été préparés selon le procédé de l'invention.

Dans ces exemples, la masse molaire moyenne en nombre des polymère synthétisés a été comparée, à titre indicatif, à la masse molaire moyenne en nombre théorique, qui serait obtenue dans le cadre d'une polymérisation parfaitement contrôlée, ce qui permet de valider le caractère particulièrement bien contrôlé de la polymérisation réalisée selon l'invention, radicalement à l'opposé des résultats usuellement obtenus lorsqu'on met en oeuvre les conditions d'une polymérisation en gel.

La masse molaire moyenne en nombre théorique à laquelle il est fait référence ici est calculée selon la formule suivante :

$$\overline{Mn}(theo) = \frac{[M]_0}{[X]_0} \times M_{MU} \times Conv. + M_X$$

où :

Mn($_{theo}$) = Masse moyenne en nombre théorique
$[M]_0$= concentration initial en monomère
$[X]_0$= concentration initiale en agent de contrôle
$M_{Mu}$= masse molaire du monomère
Conv. = conversion du monomère (rendement de la réaction)

$M_x$= Masse molaire de l'agent de contrôle

**Exemple 1 : Synthèse d'un poly(acrylamide) selon l'invention (agent de contrôle : pré-polymère vivant à fonction xanthate - amorceur : couple persulfate d'ammonium / formaldéhyde sulfoxylate de sodium)**

1.1 : Synthèse d'un pré-polymère P1 poly(acrylamide) vivant

Dans un ballon de 50 mL, on a introduit, à température ambiante (20°C), 6 g d'acrylamide en poudre (la poudre d'acrylamide employé dans l'ensemble des exemples est exempte de cuivre), 15,2 g d'eau distillée, 2,53 g de O-ethyl-S-(1-methoxycarbonyl ethyl) xanthate de formule $(CH_3CH(CO_2CH_3))S(C{=}S)OEt$, 8 g d'éthanol et 150 mg d'amorceur V-50 (2,2'-Azobis(2-methylpropionamidine)dihydrochloride). Le mélange a été dégazé par bullage d'argon extra pur pendant 30 minutes. Le ballon a ensuite été placé dans un bain d'huile thermostaté à 60°C, puis on a laissé la réaction de polymérisation s'effectuer sous agitation pendant 3 heures à 60°C.

On a obtenu une conversion de 100 % (déterminée par RMN $^1H$). La masse molaire moyenne en nombre du prépolymère P1, déterminée par RMN $^1H$, est de 750 g/mol.

1.2 : Polymérisation en gel de l'acrylamide (utilisant P1 comme agent de contrôle)

A l'issue de l'étape 1.1, le mélange réactionnel a été séché sous vide afin d'évaporer l'éthanol puis l'extrait a été réajusté par ajout d'eau distillée pour obtenir une solution aqueuse S1 du pré-polymère P1 à 50 % en masse.

Dans un ballon de 200 mL, à température ambiante, on a introduit 20 g d'acrylamide en poudre, 56 g d'eau distillée et 30 mg de la solution S1. Le mélange a été dégazé par bullage d'argon extra pur pendant 30 minutes, puis la température de la solution a été descendue à 10°C. On a ajouté au milieu, en une fois, du persulfate d'ammonium et du formaldéhyde sulfoxylate de sodium, sous forme de deux solutions aqueuse à 0,6 % en masse, 2 mL de chacune des solutions étant introduite. Ces deux solutions aqueuses de persulfate d'ammonium et formaldéhyde sulfoxylate de sodium ont été préalablement dégazées par bullage d'argon.

On a alors laissé la réaction de polymérisation se dérouler sous agitation pendant 24 heures à température ambiante (20°C).

A l'issue des 24 heures de réaction, on a obtenu une conversion de 98 % (déterminée par RMN $^1H$). Une analyse en chromatographie d'exclusion stérique dans l'eau additivé de $NaNO_3$ (0,1N) avec un détecteur MALLS dix-huit angles fournit les valeurs de masse molaire moyenne en nombre ($M_n$) et d'indice de polymolécularité ($M_w/M_n$) suivants :

$$M_n = 1\ 062\ 000 \text{ g/mol} \qquad M_w/M_n = 1{,}89.$$

A des fins de comparaison, la masse molaire moyenne en nombre théorique est de 990 00 g/mol

**Exemple 2 : Synthèse d'un poly(acrylamide) selon l'invention (agent de contrôle : pré-polymère vivant à fonction xanthate - amorceur : couple persulfate d'ammonium / formaldéhyde sulfoxylate de sodium)**

Le même pré-polymère P1 que celui de l'exemple 1 a été utilisé dans cet exemple, préparé dans les conditions de l'étape 1.1 de l'exemple 1 et utilisé sous la forme de la même solution aqueuse S1 que celle de l'étape 1 .2 de l'exemple 1.

Dans un ballon de 200 mL, à température ambiante, on a introduit 20 g d'acrylamide en poudre, 56 g d'eau distillée et 35 mg de la solution S1. Le mélange a été dégazé par bullage d'argon extra pur pendant 30 minutes, puis la température de la solution a été descendue à 10°C. On a ajouté au milieu, en une foi s, du persulfate d'ammonium et du formaldéhyde sulfoxylate de sodium, sous forme de deux solutions aqueuse à 0,6 % en masse, 2 mL de chacune des solutions étant introduite. Comme dans l'exemple 1 , les deux solutions aqueuses de persulfate d'ammonium et formaldéhyde sulfoxylate de sodium ont été préalablement dégazées par bullage d'argon.

On a alors laissé la réaction de polymérisation se dérouler sous agitation pendant 24 heures à température ambiante (20°C).

A l'issue des 24 heures de réaction, oin a obtenu une conversion de 96 % (déterminée par RMN $^1H$). Une analyse en chromatographie d'exclusion stérique dans l'eau additivé de $NaNO_3$ (0,1 N) avec un détecteur MALLS dix-huit angles fournit les valeurs de masse molaire moyenne en nombre ($M_n$) et d'indice de polymolécularité ($M_w/M_n$) suivants :

$$M_n = 846\ 000\ g/mol \qquad M_w/M_n = 1,89.$$

A des fins de comparaison, la masse molaire moyenne en nombre théorique est de 812 00 g/mol

**Exemple 3 : Synthèse d'un poly(acrylamide) selon l'invention (agent de contrôle : pré-polymère vivant à fonction xanthate - amorceur : couple persulfate d'ammonium / formaldéhyde sulfoxylate de sodium)**

Là encore, le même pré-polymère P1 que celui de l'exemple 1 a été utilisé dans cet exemple, préparé dans les conditions de l'étape 1.1 de l'exemple 1 et utilisé sous la forme de la même solution aqueuse S1 que celle de l'étape 1 .2 de l'exemple 1.

Dans un ballon de 200 mL, à température ambiante, on a introduit 20 g d'acrylamide en poudre, 56 g d'eau distillée et 50 mg de la solution S1. Le mélange a été dégazé par bullage d'argon extra pur pendant 30 minutes, puis la température de la solution a été descendue à 10°C. On a ajouté au milieu, en une fois, du persulfate d'ammonium et du formaldéhyde sulfoxylate de sodium, sous forme de deux solutions aqueuse à 0,6 % en masse, 2 mL de chacune des solutions étant introduite. Comme dans l'exemple 1 , les deux solutions aqueuses de persulfate d'ammonium et formaldéhyde sulfoxylate de sodium ont été préalablement dégazées par bullage d'argon.

On a alors laissé la réaction de polymérisation se dérouler sous agitation pendant 24 heures à température ambiante (20°C).

A l'issue des 24 heures de réaction, on a obtenu une conversion de 88 % (déterminée par RMN $^1H$). Une analyse en chromatographie d'exclusion stérique dans l'eau additivé de $NaNO_3$ (0,1N) avec un détecteur MALLS dix-huit angles fournit les valeurs de masse molaire moyenne en nombre ($M_n$) et d'indice de polymolécularité ($M_w/M_n$,) suivants :

$$M_n = 640\ 000\ g/mol \qquad M_w/M_n = 1,81.$$

A des fins de comparaison, la masse molaire moyenne en nombre théorique est de 530 000 g/mol

**Exemple 4 : Synthèse d'un poly(acrylamide) selon l'invention (agent de contrôle : pré-polymère vivant à fonction xanthate - amorceur : couple persulfate d'ammonium / formaldéhyde sulfoxylate de sodium)**

Le même pré-polymère P1 que celui de l'exemple 1 a été utilisé dans cet exemple, préparé dans les conditions de l'étape 1.1 de l'exemple 1 et utilisé sous la forme de la même solution aqueuse S1 que celle de l'étape 1.2 de l'exemple 1.

Dans un ballon de 200 mL, à température ambiante, on a introduit 10 g d'acrylamide poudre, 26 g d'eau distillée et 35 mg de la solution S1. Le mélange a été dégazé par bullage d'argon extra pur pendant 30 minutes, puis la température de la solution a été descendue à 10°C. On a ajouté au milieu, en une fois, du persulfate d'ammonium et du formaldéhyde sulfoxylate de sodium, sous forme de deux solutions aqueuse à 0,6 % en masse, 1 mL de chacune des solutions étant introduite. Comme dans l'exemple 1 , les deux solutions aqueuses de persulfate d'ammonium et formaldéhyde sulfoxylate de sodium ont été préalablement dégazées par bullage d'argon.

On a alors laissé la réaction de polymérisation se dérouler sous agitation pendant 24 heures à température ambiante (20°C).

A l'issue des 24 heures de réaction, on a obtenu une conversion de 100 % , déterminée par RMN $^1H$. Une analyse en chromatographie d'exclusion stérique dans l'eau additivé de $NaNO_3$ (0,1N) avec un détecteur MALLS dix-huit angles fournit les valeurs de masse molaire moyenne en nombre ($M_n$) et d'indice de polymolécularité ($M_w/M_n$) suivants :

$$M_n = 452\ 700\ g/mol \qquad M_w/M_n = 1,59.$$

A des fins de comparaison, la masse molaire moyenne en nombre théorique est de 410 000 g/mol

**Exemple 5 : Synthèse d'un poly(acrylamide) selon l'invention (agent de contrôle : pré-polymère vivant à fonction xanthate - amorceur : couple persulfate d'ammonium / formaldéhyde sulfoxylate de sodium)**

Le même pré-polymère P1 que celui de l'exemple 1 a été utilisé dans cet exemple, préparé dans les conditions de l'étape 1.1 de l'exemple 1 et utilisé sous la forme de la même solution aqueuse S1 que celle de l'étape 1 .2 de

l'exemple 1.

Dans un ballon de 200 mL, à température ambiante, on a introduit 10 g d'acrylamide poudre, 26 g d'eau distillée et 150 mg de la solution S1. Le mélange a été dégazé par bullage d'argon extra pur pendant 30 minutes, puis la température de la solution a été descendue à 10°C. On a ajouté au milieu, en une fois, du persulfate d'ammonium et du formaldéhyde sulfoxylate de sodium, sous forme de deux solutions aqueuse à 0,6 % en masse, 1 mL de chacune des solutions étant introduite. Comme dans l'exemple 1 , les deux solutions aqueuses de persulfate d'ammonium et formaldéhyde sulfoxylate de sodium ont été préalablement dégazées par bullage d'argon.

On a alors laissé la réaction de polymérisation se dérouler sous agitation pendant 24 heures à température ambiante (20°C).

A l'issue des 24 heures de réaction, on a obtenu une conversion de 100 % , déterminée par RMN $^1H$. Une analyse en chromatographie d'exclusion stérique dans l'eau additivé de $NaNO_3$ (0,1N) avec un détecteur MALLS dix-huit angles fournit les valeurs de masse molaire moyenne en nombre ($M_n$) et d'indice de polymolécularité ($M_w/M_n$) suivants :

$$M_n = 103\ 700\ g/mol \qquad M_w/M_n = 1,59.$$

A des fins de comparaison, la masse molaire moyenne en nombre théorique est de 100 000 g/mol

Bien que les exemples 1 à 5 aient été conduits avec un acrylamide non stabilisés des résultats similaires sont obtenus avec des acrylamides stabilisés, par des sels de cuivre par exemple (avec ajout d'un complexant de type EDTA pour éviter l'exothermie), ou bien par la MEHQ.

**Exemple 6 : Synthèse d'un copolymère dibloc poly(acide acrylique)-b-poly(acrylamide) - Synthèse du bloc poly(acrylamide) selon l'invention (agent de contrôle : polyacrylate vivant à terminaison xanthate - amorceur : couple persulfate d'ammonium / formaldéhyde sulfoxylate de sodium)**

6.1 : Synthèse d'un poly(acide acrylique) vivant à terminaison xanthate (polymère P6)

Dans un ballon de 15 mL à température ambiante, on a introduit 4 g d'acide acrylique, 3,2 g d'eau distillée, 0,8 g d'éthanol, 87 mg de O-ethyl-S-(1-methoxycarbonyl ethyl) xanthate de formule $(CH_3CH(CO_2CH_3))S(C=S)OEt$ et 25 mg d'acide 4,4'-Azobis(4-cyanovalérique). Le mélange a été dégazé par bullage d'argon extra pur pendant 30 minutes.

Le ballon a ensuite été placé dans un bain d'huile thermostaté à 60°C, et le milieu réactionnel a été laissé sous agitation pendant 2 heures à 60°C.

A l'issue de ces deux heures, une conversion de 99 % a été déterminée par RMN $^1H$.

Une analyse en chromatographie d'exclusion stérique dans l'eau additivé de $NaNO_3$ (0,1N) avec un détecteur MALLS dix-huit angles fournit les valeurs de masse molaire moyenne en nombre ($M_n$) et d'indice de polymolécularité ($M_w/M_n$) suivants pour le polymère P6 ainsi obtenu :

$$M_n = 13\ 000\ g/mol \qquad M_w/M_n = 1,52.$$

6.2 : Synthèse du copolymère dibloc

A l'issue de l'étape 6.1, le mélange réactionnel a été séché sous vide puis repris dans l'éthanol et précipité dans le diéthyléther. Le précipité obtenu a été séché sous vide pendant 24 heures afin d'éliminer les solvants résiduels, ce par quoi on a obtenu le polymère P6 sous la forme d'une poudre séchée.

On a introduit 20 mg de cette poudre séchée de polymère P6 dans un ballon de 15 mL, à température ambiante, puis on a ajouté dans le ballon 2 g d'acrylamide en poudre et 5,6 g d'eau distillée.

Le mélange a été dégazé par bullage d'argon extra pur pendant 30 minutes, puis la température de la solution a été descendue à 10°C. On a ajouté au milieu, en une fois, du persulfate d'ammonium et du formaldéhyde sulfoxylate de sodium, sous forme de deux solutions aqueuse à 0,6 % en masse, 0,2 mL de chacune des solutions étant introduite. Les deux solutions aqueuses de persulfate d'ammonium et formaldéhyde sulfoxylate de sodium ont été préalablement dégazées par bullage d'argon.

On a alors laissé la réaction de polymérisation se dérouler sous agitation pendant 24 heures à température ambiante (20°C).

A l'issue des 24 heures de réaction, on a obtenu une conversion de 96 %, telle que déterminée par RMN $^1H$.

Une analyse en chromatographie d'exclusion stérique dans l'eau additivé de $NaNO_3$ (0,1N) avec un détecteur

MALLS dix-huit angles fournit les valeurs de masse molaire moyenne en nombre ($M_n$) et d'indice de polymolécularité ($M_w/M_n$) suivants :

$$M_n = 682\ 000\ g/mol \qquad M_w/M_n = 2{,}18.$$

A des fins de comparaison, la masse molaire moyenne en nombre théorique est de 890 000 g/mol

**Exemple 7: Synthèse d'un copolymère dibloc poly(acide acrylique)-b-poly(acrylamide) - Synthèse du bloc poly(acrylamide) selon l'invention (agent de contrôle : polyacrylate vivant à terminaison xanthate - amorceur : couple persulfate d'ammonium / formaldéhyde sulfoxylate de sodium)**

Le même polymère P6 que celui de l'exemple 6 a été utilisé dans cet exemple, employé sous la forme d'une poudre préparée dans les conditions de l'étape 6.2 de l'exemple 6.

On a introduit 210 mg de la poudre de polymère P6 dans un ballon de 15 mL, à température ambiante, puis on a ajouté dans le ballon 2 g d'acrylamide poudre et 5,6 g d'eau distillée.

Le mélange a été dégazé par bullage d'argon extra pur pendant 30 minutes, puis la température de la solution a été descendue à 10°C. On a ajouté au milieu, en une fois, du persulfate d'ammonium et du formaldéhyde sulfoxylate de sodium, sous forme de deux solutions aqueuse à 0,6 % en masse, 0,2 mL de chacune des solutions étant introduite. Les deux solutions aqueuses de persulfate d'ammonium et formaldéhyde sulfoxylate de sodium ont été préalablement dégazées par bullage d'argon.

On a alors laissé la réaction de polymérisation se dérouler sous agitation pendant 24 heures à température ambiante (20°C).

A l'issue des 24 heures de réaction, on a obtenu une conversion de 99 %, telle que déterminée par RMN $^1H$.

Une analyse en chromatographie d'exclusion stérique dans l'eau additivé de $NaNO_3$ (0,1N) avec un détecteur MALLS dix-huit angles fournit les valeurs de masse molaire moyenne en nombre ($M_n$) et d'indice de polymolécularité ($M_w/M_n$) suivants :

$$M_n = 108\ 000\ g/mol \qquad M_w/M_n = 1{,}46.$$

A des fins de comparaison, la masse molaire moyenne en nombre théorique est de 100 000 g/mol

**Exemple 8 : Synthèse d'un copolymère dibloc poly(acide 2-acrylamido-2-methylpropane sulfonique)-b-poly(acrylamide) Synthèse du bloc poly(acrylamide) selon l'invention (agent de contrôle : poly(AMPS) vivant à terminaison xanthate - amorceur : couple persulfate d'ammonium / formaldéhyde sulfoxylate de sodium)**

8.1 Synthèse d'un poly(acide 2-acrylamido-2-methylpropane sulfonique) vivant à terminaision xanthate (polymère P8)

Dans un ballon de 25 mL à température ambiante, on a introduit 8 g d'une solution aqueuse d'acide 2-acrylamido-2-methylpropane sulfonique (AMPS ; concentration : 50 % massique), 1,4 g d'eau distillée, 1,2 g d'éthanol, 90 mg de O-ethyl-S-(1-methoxycarbonyl ethyl) xanthate de formule $(CH_3CH(CO_2CH_3))S(C{=}S)OEt$ et 40 mg d'acide 4,4'-Azobis(4-cyanovalérique). Le mélange a été dégazé par bullage d'argon extra pur pendant 30 minutes.

Le ballon a ensuite été placé dans un bain d'huile thermostaté à 60°C, et le milieu réactionnel a été laissé sous agitation pendant 2 heures à 60°C.

A l'issue de ces deux heures, une conversion de 99 % a été déterminée par RMN $^1H$.

Une analyse en chromatographie d'exclusion stérique dans l'eau additivé de $NaNO_3$ (0,1N) avec un détecteur MALLS dix-huit angles fournit les valeurs de masse molaire moyenne en nombre ($M_n$) et d'indice de polymolécularité ($M_w/M_n$) suivants :

$$M_n = 10\ 700\ g/mol\ M_w/M_n = 1{,}45.$$

8.2 : Synthèse du copolymère dibloc

A l'issue de l'étape 8.1, le mélange réactionnel a été séché sous vide puis repris dans l'éthanol et précipité dans le diéthyléther. Le précipité obtenu a été séché sous vide pendant 24 heures afin d'éliminer les solvants résiduels,

ce par quoi on a obtenu le polymère P8 sous la forme d'une poudre séchée.

On a introduit 20 mg de cette poudre séchée de polymère P8 dans un ballon de 15 mL, à température ambiante, puis on a ajouté dans le ballon 2 g d'acrylamide poudre et 5,6 g d'eau distillée.

Le mélange a été dégazé par bullage d'argon extra pur pendant 30 minutes, puis la température de la solution a été descendue à 10°C. On a ajouté au milieu, en une fois, du persulfate d'ammonium et du formaldéhyde sulfoxylate de sodium, sous forme de deux solutions aqueuse à 0,6 % en masse, 0,2 mL de chacune des solutions étant introduite. Les deux solutions aqueuses de persulfate d'ammonium et formaldéhyde sulfoxylate de sodium ont été préalablement dégazées par bullage d'argon.

On a alors laissé la réaction de polymérisation se dérouler sous agitation pendant 24 heures à température ambiante (20°C).

A l'issue des 24 heures de réaction, on a obtenu une conversion de 96 %, telle que déterminée par RMN $^1H$.

Une analyse en chromatographie d'exclusion stérique dans l'eau additivé de $NaNO_3$ (0,1N) avec un détecteur MALLS dix-huit angles fournit les valeurs de masse molaire moyenne en nombre ($M_n$) et d'indice de polymolécularité ($M_w/M_n$) suivants :

$$M_n = 730\ 000 \text{ g/mol} \qquad M_w/M_n = 2{,}51.$$

A des fins de comparaison, la masse molaire moyenne en nombre théorique est de 950 000 g/mol

**Exemple 9 : Synthèse d'un copolymère dibloc poly(acide 2-acrylamido-2-methylpropane sulfonique)-b-poly(acrylamide) Synthèse du bloc poly(acrylamide) selon l'invention (agent de contrôle : poly(AMPS) vivant à terminaison xanthate - amorceur : couple persulfate d'ammonium / formaldéhyde sulfoxylate de sodium)**

Le même polymère P8 que celui de l'exemple 8 a été utilisé dans cet exemple, employé sous la forme d'une poudre préparée dans les conditions de l'étape 8.2 de l'exemple 8.

On a introduit 215 mg de la poudre de polymère P8 dans un ballon de 15 mL, à température ambiante, puis on a ajouté 2 g d'acrylamide en poudre et 5,6 g d'eau distillée.

Le mélange a été dégazé par bullage d'argon extra pur pendant 30 minutes, puis la température de la solution a été descendue à 10°C. On a ajouté au milieu, en une fois, du persulfate d'ammonium et du formaldéhyde sulfoxylate de sodium, sous forme de deux solutions aqueuse à 0,6 % en masse, 0,2 mL de chacune des solutions étant introduite. Les deux solutions aqueuses de persulfate d'ammonium et formaldéhyde sulfoxylate de sodium ont été préalablement dégazées par bullage d'argon.

On a alors laissé la réaction de polymérisation se dérouler sous agitation pendant 24 heures à température ambiante (20°C).

A l'issue des 24 heures de réaction, on a obtenu une conversion de 100 %, telle que déterminée par RMN $^1H$.

Une analyse en chromatographie d'exclusion stérique dans l'eau additivé de $NaNO_3$ (0,1N) avec un détecteur MALLS dix-huit angles fournit les valeurs de masse molaire moyenne en nombre ($M_n$) et d'indice de polymolécularité ($M_w/M_n$) suivants :

$$M_n = 105\ 000 \text{ g/mol} \qquad M_w/M_n = 2{,}44.$$

A des fins de comparaison, la masse molaire moyenne en nombre théorique est de 100 000 g/mol

**Exemple 10 : Synthèse d'un copolymère dibloc poly(chlorure d'acrylamidopropyltrimethylammonium)-b-poly(acrylamide) - Synthèse du bloc poly(acrylamide) selon l'invention (agent de contrôle : polymère vivant à terminaison xanthate - amorceur : couple persulfate d'ammonium / formaldéhyde sulfoxylate de sodium)**

<u>10.1 : Synthèse du polymère poly(chlorure d'acrylamidopropyltrimethylammonium) vivant à terminaison xanthate (polymère P10)</u>

Dans un ballon de 25 mL à température ambiante, on a introduit 8 g solution de chlorure d'acrylamidopropyltrimethylammonium (solution 75 % massique dans l'eau), 3,9 g d'eau distillée, 1,3 g d'éthanol, 130 mg de O-ethyl-S-(1-methoxycarbonyl ethyl) xanthate de formule $(CH_3CH(CO_2CH_3))S(C{=}S)OEt$ et 30 mg d'amorceur V-50 (2,2'-Azobis(2-méthyle-propionamidine) dihydrochloride). Le mélange a été dégazé par bullage d'argon extra pur pendant 30 minutes.

Le ballon a ensuite été placé dans un bain d'huile thermostaté à 60°C, et le milieu réactionnel a été laissé sous

agitation pendant 2 heures à 60°C.

A l'issue de ces deux heures, une conversion de 99 % a été déterminée par RMN $^1H$.

Une analyse en chromatographie d'exclusion stérique dans l'eau additivé de $NaNO_3$ (0,1N) avec un détecteur MALLS dix-huit angles fournit les valeurs de masse molaire moyenne en nombre ($M_n$) et d'indice de polymolécularité ($M_w/M_n$) suivants :

$$M_n = 13\ 100 \text{ g/mol} \qquad M_w/M_n = 1{,}64.$$

10.2 : Synthèse du copolymère dibloc

A l'issue de l'étape 10.1, le mélange réactionnel a été séché sous vide puis repris dans l'éthanol et précipité dans le diéthyléther. Le précipité obtenu a été séché sous vide pendant 24 heures afin d'éliminer les solvants résiduels, ce par quoi on a obtenu le polymère P10 sous la forme d'une poudre séchée.

On a introduit 20 mg de cette poudre séchée de polymère P10 dans un ballon de 15 mL, à température ambiante, puis on a ajouté dans le ballon 2 g d'acrylamide poudre et 5,6 g d'eau distillée.

Le mélange a été dégazé par bullage d'argon extra pur pendant 30 minutes, puis la température de la solution a été descendue à 10°C. On a ajouté au milieu, en une fois, du persulfate d'ammonium et du formaldéhyde sulfoxylate de sodium, sous forme de deux solutions aqueuse à 0,6 % en masse, 0,2 mL de chacune des solutions étant introduite. Les deux solutions aqueuses de persulfate d'ammonium et formaldéhyde sulfoxylate de sodium ont été préalablement dégazées par bullage d'argon.

On a alors laissé la réaction de polymérisation se dérouler sous agitation pendant 24 heures à température ambiante (20°C).

A l'issue des 24 heures de réaction, on a obtenu une conversion de 99 %, telle que déterminée par RMN $^1H$.

Une analyse en chromatographie d'exclusion stérique dans l'eau additivé de $NaNO_3$ (0,1N) avec un détecteur MALLS dix-huit angles fournit les valeurs de masse molaire moyenne en nombre ($M_n$) et d'indice de polymolécularité ($M_w/M_n$) suivants :

$$M_n = 806\ 000 \text{ g/mol} \qquad M_w/M_n = 3{,}25.$$

A des fins de comparaison, la masse molaire moyenne en nombre théorique est de 900 000 g/mol

**Exemple 11 : Synthèse d'un copolymère dibloc poly(chlorure d'acrylamidopropyltrimethylammonium)-b-poly(acrylamide) - Synthèse du bloc poly(acrylamide) selon l'invention (agent de contrôle : polymère vivant à terminaison xanthate - amorceur : couple persulfate d'ammonium / formaldéhyde sulfoxylate de sodium)**

Etape 1 : Synthèse du bloc poly(chlorure d'acrylamidopropyltrimethylammonium).

Le même polymère formé lors de l'exemple 8 est utilisé.

Etape 2 : Synthèse du copolymère dibloc

Le même polymère P10 que celui de l'exemple 10 a été utilisé dans cet exemple, employé sous la forme d'une poudre préparée dans les conditions de l'étape 10.2 de l'exemple 10.

On a introduit 215 mg de la poudre de polymère P8 dans un ballon de 15 mL, à température ambiante, puis on a ajouté 2 g d'acrylamide en poudre et 5,6 g d'eau distillée.

. Le mélange a été dégazé par bullage d'argon extra pur pendant 30 minutes, puis la température de la solution a été descendue à 10°C. On a ajouté au milieu, en une fois, du persulfate d'ammonium et du formaldéhyde sulfoxylate de sodium, sous forme de deux solutions aqueuse à 0,6 % en masse, 0,2 mL de chacune des solutions étant introduite. Les deux solutions aqueuses de persulfate d'ammonium et formaldéhyde sulfoxylate de sodium ont été préalablement dégazées par bullage d'argon.

On a alors laissé la réaction de polymérisation se dérouler sous agitation pendant 24 heures à température ambiante (20°C).

A l'issue des 24 heures de réaction, on a obtenu une conversion de 98 %, telle que déterminée par RMN $^1H$.

.Une analyse en chromatographie d'exclusion stérique dans l'eau additivé de $NaNO_3$ (0,1N) avec un détecteur MALLS dix-huit angles fournit les valeurs de masse molaire moyenne en nombre ($M_n$) et d'indice de polymolécularité ($M_w/M_n$) suivants :

$$M_n = 160\ 500\ g/mol \qquad M_w/M_n = 2,0.$$

A des fins de comparaison, la masse molaire moyenne en nombre théorique est de 100 000 g/mol

## Revendications

1. Procédé de préparation d'un polymère comprenant au moins une étape (E) de polymérisation en gel dans laquelle on met en contact :

   - des monomères hydrosolubles éthyléniquement insaturés, identiques ou différents ;
   - une source de radicaux libres adaptée à la polymérisation desdits monomères, typiquement un système redox ; et
   - un agent de contrôle de la polymérisation radicalaire, de préférence comprenant un groupe thiocarbonylthio -S(C=S)-,

   avec une concentration en monomères au sein du milieu réactionnel de l'étape (E) qui est suffisamment élevée pour induire la gélification du milieu si la polymérisation était conduite en l'absence de l'agent de contrôle.

2. Procédé selon la revendication 1, où, dans l'étape (E), les monomères, la source de radicaux libres et l'agent de contrôle sont mis en contact en milieu aqueux.

3. Procédé selon la revendication 1 ou 2, où, dans l'étape (E), les monomères mis en oeuvre dans l'étape (E) comprennent ou sont constitués de monomères acrylamido.

4. Procédé selon l'une des revendications 1 à 3, où, dans l'étape (E), la concentration initiale en monomères dans le milieu réactionnel de l'étape (E) est comprise entre 10 et 40% en masse par rapport à la masse totale du milieu réactionnel

5. Procédé selon l'une des revendications 1 à 4, où, dans l'étape (E), la source de radicaux libres employée est un amorceur redox.

6. Procédé selon la revendication 5, où, dans l'étape (E), la source de radicaux libres est un système redox qui est une association de persulfate d'ammonium et de formaldéhyde sulfoxylate de sodium.

7. Procédé selon l'une des revendications 1 à 6, où, dans l'étape (E), l'agent de contrôle utilisé est un composé porteur d'un groupe thiocarbonylthio -S(C=S)-.

8. Procédé selon la revendication 7, où, dans l'étape (E), l'agent de contrôle utilisé est un composé porteur d'une fonction xanthate -S(C=S)O-, par exemple porteur d'une fonction O-ethyl xanthate de formule $-S(C=S)OCH_2CH_3$.

9. Procédé selon la revendication 7 ou 8, où, dans l'étape (E), l'agent de contrôle utilisé est un polymère vivant porteur de ladite fonction thiocarbonylthio, qui est préparé dans une étape de polymérisation radicalaire contrôlée préalable à l'étape (E).

10. Procédé selon l'une des revendications 1 à 9, où le milieu réactionnel de l'étape (E) soit exempt de cuivre.

11. Procédé selon l'une des revendications 1 à 10, où l'étape (E) est mise en oeuvre en l'absence de tout agent de réticulation.

12. Procédé selon l'une des revendications 1 à 11, où, dans l'étape (E), la concentration initiale en agent de contrôle dans le milieu est choisie telle que la masse molaire moyenne en nombre $M_n$ du polymère hydrophile synthétisé

est supérieure à 100 000 g/mol, de préférence supérieure ou égale à 500 000 g/mol.

**13.** Polymère susceptible d'être obtenu à l'issue du procédé de la revendication 12, qui comprend au moins un bloc polymère hydrophile de masse contrôlée autour d'une valeur moyenne $M_n$ d'au moins 100 000 g/mol, de préférence d'au moins 500 000g/mol.

**14.** Polymère selon la revendication 13, qui comprend au moins un bloc polyacrylamide de masse contrôlée autour d'une valeur moyenne $M_n$ d'au moins 100 000 g/mol, de préférence d'au moins 500 000g/mol.

**15.** Polymère selon la revendication 13 ou 14, **caractérisé en ce qu'**il est linéaire.

**16.** Utilisation d'un polymère selon la revendication 13 à 15, à titre d'agent régulateur de rhéologie, agent floculant, épaississant, viscosant, gélifiant, modificateur de surface, ou pour la constitution de matériaux nanonohybrides.

Europäisches Patentamt
European Patent Office
Office européen des brevets

# RAPPORT DE RECHERCHE EUROPEENNE

Numéro de la demande
EP 16 19 7743

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JING JI ET AL: "Efficient Synthesis of Poly(acrylic acid) in Aqueous Solution via a RAFT Process", JOURNAL OF MACROMOLECULAR SCIENCE, PART A, vol. 47, no. 5, 31 mars 2010 (2010-03-31), pages 445-451, XP55181266, ISSN: 1060-1325, DOI: 10.1080/10601321003659705 | 1,2,4-7, 9-13,15, 16 | INV. C08F2/38 |
| Y | * tableau 1 * * alinéa [2.2.2] * | 3,8,14 | |
| Y | FR 2 894 971 A1 (RHODIA RECHERCHES & TECH [FR]) 22 juin 2007 (2007-06-22) * page 1, lignes 5-6 * * page 14, lignes 25-27 * * page 18, lignes 24-34 * * page 19, lignes 4-5 * * page 19, ligne 19 * * page 23, ligne 15 * * exemple 1 * | 3,8,14 | |

DOMAINES TECHNIQUES RECHERCHES (IPC)

C08F
C11D

Le présent rapport a été établi pour toutes les revendications

1

| Lieu de la recherche | Date d'achèvement de la recherche | Examinateur |
|---|---|---|
| La Haye | 3 juillet 2017 | Queste, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 16 19 7743

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-07-2017

| Document brevet cité au rapport de recherche | Date de publication | Membre(s) de la famille de brevet(s) | Date de publication |
|---|---|---|---|
| FR 2894971 A1 | 22-06-2007 | EP 1966305 A1 | 10-09-2008 |
| | | FR 2894971 A1 | 22-06-2007 |
| | | JP 2009520091 A | 21-05-2009 |
| | | US 2010004152 A1 | 07-01-2010 |
| | | WO 2007071591 A1 | 28-06-2007 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2010046342 A
- WO 2008155282 A
- WO 9630421 A
- WO 9801478 A
- WO 9935178 A
- WO 9858974 A
- WO 0075207 A
- WO 0142312 A
- WO 9935177 A
- WO 9931144 A
- FR 2794464
- WO 0226836 A
- US 3002960 A
- US 3022 A
- US 279 A
- US 3480761 A
- US 3929791 A
- US 4455411 A
- US 7449439 B


### Littérature non-brevet citée dans la description


- *Macromolecular Rapid Communications,* 2008, vol. 29 (7), 562-566
- *Macromolecular Rapid Communications,* 2007, vol. 28 (9), 1010
- *Iranian Polymer Journal,* 2005, vol. 14 (7), 603-608